Europäisches Patentamt

(19) European Patent Office

Office européen des brevets

(11) Publication number: **0 084 713**
**B1**

(12) **EUROPEAN PATENT SPECIFICATION**

(45) Date of publication of patent specification: **04.03.87**

(21) Application number: **82306446.4**

(22) Date of filing: **03.12.82**

(51) Int. Cl.⁴: **B 25 B 27/10**

(54) **Crimp locator.**

(30) Priority: **21.12.81 US 332639**

(43) Date of publication of application:
**03.08.83 Bulletin 83/31**

(45) Publication of the grant of the patent:
**04.03.87 Bulletin 87/10**

(84) Designated Contracting States:
**DE FR GB IT**

(56) References cited:
**DE-A-2 214 339**
**US-A-2 622 652**
**US-A-2 978 263**
**US-A-3 115 797**
**US-A-3 720 088**
**US-A-4 034 592**

(73) Proprietor: **PARKER HANNIFIN CORPORATION**
**17325 Euclid Avenue**
**Cleveland Ohio 44112 (US)**

(72) Inventor: **Burrington, George C.**
**15720 Holmes Avenue**
**Cleveland Ohio 44110 (US)**

(74) Representative: **Thomas, Roger Tamlyn et al**
**D. Young & Co. 10 Staple Inn**
**London WC1V 7RD (GB)**

Courier Press, Leamington Spa, England.

## Description

The invention relates to apparatus for permanently attaching a coupling of the kind having a collar and an insert upon the end of flexible hose.

The coupling is attached by crimping or radial compression of the collar of the fitting onto the hose.

Apparatus of this kind is well established in the art and is used extensively for the manufacture of hose assemblies whenever fluids are to be transmitted between various components of fluid power devices. Hose assemblies typically are manufactured either as factory assemblies on a mass-production basis or as field-assembled devices where repair of the assembly is to be made or when a specialized form of assembly is desired. It is with field-assembly components that this invention is primarily concerned.

In constructing hose assemblies it is essential that proper registration be made not only between the hose and fitting but also between the fitting and the crimp machine so that crimp indentations can be made accurately at the location on the fitting and with respect to the hose gripped thereby, so as to achieve the secure grip envisioned by the designer. Typically, this involves an axial registration between the hose fitting and the crimp dies. Radial registration is usually automatically achieved, in that as the crimp dies contract the fitting will be shifted radially to a location to accommodate substantially equal forces from each of the crimping dies. Freedom for such radial shifting must, however, be provided in any locator device.

In factory crimp situations, suitable specialized devices can usually be fabricated to provide the necessary axial registration. In field-crimp applications however, where a wide variety of hose fittings, sizes or applications are encountered, it is difficult to provide a simplified mechanism for guaranteeing that the optimum registration between fitting and machine will be made. In the past, it has been left primarily to the operator to make such a judgement, usually by making a visual sighting between a mark on the fitting and one on the die segments. This is unreliable however, not only because of errors in judgement which might be made by the operator but also because it is a difficult procedure with the crimp location not readily accessible or viewable.

Attempts have been made in the past to provide such crimp locator. For example, in United States Patent No. US—A—4,034,592, two versions of a crimp locator are shown in Figures 3 and 9. One is an end locator suitable for straight end fitting while the latter may be used as well on bent end fittings. Both however have limitations, the former, as indicated, being suited only for straight end fittings and the latter requiring the provision of an otherwise non-functional shoulder on the fitting. The latter device also necessitates several additional components for the crimp machine and is located so as possibly to interfere with the crimp operation and with the loading and removal of parts from the machine.

A similar arrangement is shown in United States Patent No. US—A—2,622,652 wherein a socket chuck is used to support a coupling in relation to crimp dies. Such arrangement is limited in requiring different size chucks for different size couplings and is useful primarily only for straight end fittings.

A still closer approach is shown in United States Patent No. US—A—3,115,797 wherein a locating shoulder is provided on each of a pair of dies in apparatus in which an internal mandrel swage is also utilized to secure a ferrule on a length of thin wall tube. There is no teaching in this patent that the dies of the apparatus undergo both radial and axial movement in the application of the ferrule and that the apparatus would be suited for the crimping of both straight and bent fittings in which a hose end is retained. Further, the teachings of this patent are directed to a pair of dies in which only a linear relative movement is required rather than to the several die arrangement of the present invention, in which radial movement of all die segments is encountered.

United States specification US—A—3 702 088 discloses locator means for axially positioning a hose coupling with respect to a plurality of crimping fingers, the locator means comprising a sleeve locator formed as a generally cylindrical member having a locating shoulder for receiving in abutting engagement an enlarged wrench receiving portion of the house coupling provided at the upper end, that is to say the free end, of the hose coupling. The generally cylindrical member may include a slot through which a portion of the hose coupling can project laterally when the hose coupling has an appended elbow connection.

German specification DE—A—2 214 339 discloses spring means provided between individual die segments of a die set to bias the segments apart and thereby obtain simultaneous movement of the die segments towards a radially constricted crimping position.

According to the invention there is provided apparatus for permanently attaching a coupling of the kind having a collar and an insert upon the end of a flexible hose, comprising

a hydraulically actuated tool developing force for crimping said hose coupling, said tool having a base plate and a ram axially movable relative to the base plate.

a die cavity in the base plate, the die cavity comprising an aperture with a tapered surface surrounding the aperture,

a plurality of die segments supported in the die cavity in a circular array surrounding the aperture the die segments having radially inner faces for engagement with the hose coupling and a tapered outer surface in engagement with the tapered surface of the die cavity and being capable of being moved axially downwardly with respect to the die cavity toward the narrow end thereof in response to urging of the ram, thereby to be moved radially inwardly toward a radially constricted crimping position,

resilient means in engagement with the die segments for securing simultaneous movement of the die segments into the die cavity and simultaneous movement of the die segments toward the radially constricted crimping position for crimping of the coupling, and

positioning means for engagement by the hose coupling for relatively positioning the hose coupling axially with respect to the crimping faces, permitting limited radial movement of coupling relative to the die segments prior to crimping so that the coupling may conform to the crimping faces of the die segments and for maintaining said relative axial position until the coupling is fully crimped,

characterized in that the positioning means comprises ledge means on the die segments extending radially inwardly of the crimping faces adjacent the lower edge of the crimping faces to engage beneath the lower edge of the coupling and thereby support and position the coupling.

Although both axial motion and relative radial positioning of the die segments are encountered during the crimp cycle, they are readily accommodated so that the crimp occurs at the proper location along the length of the collar of the fitting.

Preferably the ledge means comprises a shoulder on each side of the die segments having a flat upper surface.

Provision of a shoulder on each die segment, results in a ring-like shelf among the array of segments which can be referenced to the end of the fitting collar. The shelf allows radial movement of the fitting during crimping to provide equalization of the crimping forces and continuously supports the fitting during the cycle.

Advantages of the embodiment of this invention hereinafter described include the capability for locating both bent and straight-end fittings, the capability for locating fittings for different hose sizes and an automatic registration scheme which can be made by touch alone, not requiring visual sighting. These can be accomplished without obstruction of the crimping area or adjacent areas which facilitates loading of the machine and production of hose assemblies of high integrity.

An embodiment of the invention will now be described by way of example with reference to the accompanying drawings, in which:—

Figure 1 is a view in elevation of a crimping machine of the invention, with a ram extended and die segments fully contracted;

Figure 2 is a plan view of a die segment assembly removed from the crimping machine of Figure 1 with the die segments in a non-contracted position;

Figure 3 is a view, partly in section, of a portion of the crimping machine of Figure 1, showing a hose and fitting positioned in the die segment assembly preparatory to the crimping operation; and

Figure 4 is a view of the apparatus shown in Figure 3 at the completion of the crimping operation.

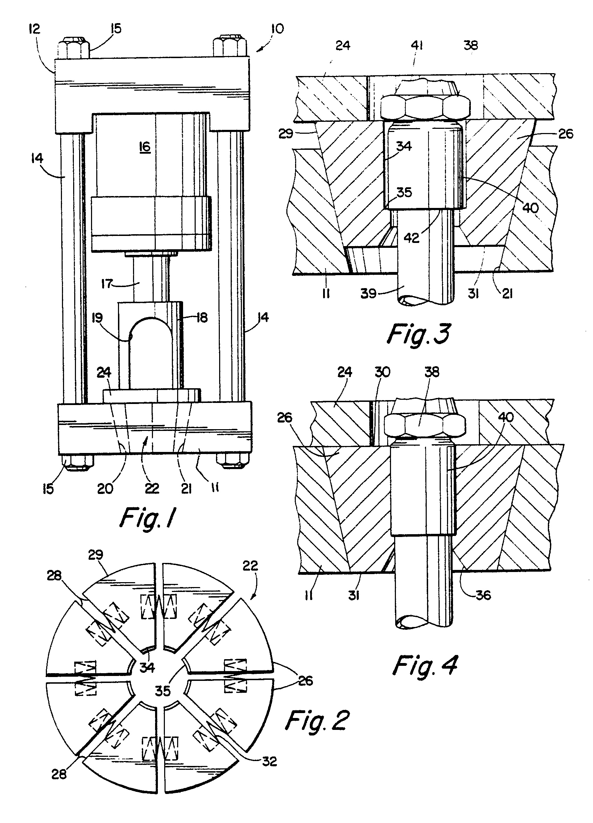

Referring to Figure 1, a typical crimping machine 10 comprises a base plate 11 and an upper support plate 12, separated from each other to provide a work zone therebetween and supported by tie rods 14 at each corner, the tie rods 14 being threaded and secured at their ends by nuts 15. Supported from the upper plate 12 is a hydraulic cylinder 16 which includes an axially extendible and retractable ram 17, actuated from an external source of fluid under pressure. The crimping machine 10 is typically mounted at the base plate 11 in a generally vertical disposition on suitable support brackets so that access may be had to the lower surface of the base plate 11 for introducing hose and fittings for crimping operations. In such a disposition, the ram 17 is moved along a generally vertical axis toward and away from the base plate 11.

A pusher member 18 is supported at the end of the ram 17 for movement therewith and for extending the reach of the ram 17. The pusher 18 is of a generally tubular structure having a cut-out section 19 at the front portion thereof to allow access to the interior thereof by the operator of the crimping machine and to allow the protrusion of the bent end of fittings when such are placed in the crimping machine.

The base plate 11 includes a tapered die cavity 20 therein disposed in the central portion and in alignment with the axis of the ram 17. The cavity 20 is generally of frusto-conical configuration and extends through the base plate 11, having a side wall 21 which terminates at the upper surface of the base plate 11 in a large diameter and at the lower surface of the base plate 11, in a smaller diameter. Disposed in the die cavity 20 is a die segment assembly 22, shown in a lowermost position. A die ring 24 comprising a circular plate with a central aperture is positioned over and in engagement with the die segment assembly 22 and with the lower end of the pusher member 18 and limits downward movement of the ram 17 upon engagement with the upper surface of the base plate 11.

The die assembly 17 is seen more clearly in Figures 2 to 4 as comprising eight die segments 26 disposed in a circular array and forming a segmented ring structure which may be circumferentially and radially constricted and expanded. Each of the die segments 26 in this embodiment of the invention is of generally triangular configuration having a pair of flat side walls 28 intersected by an arcuate outer wall 29 conforming to the curvature of the die cavity 20, thus tapering downwardly and inwardly and terminating at flat upper surfaces 30, 31 respectively. Each of the die segments 26 includes a recess centrally of each of the side walls 28 and coil springs 32 are secured in the recesses between adjacent ones of the die segments 26 to retain the segments in a circular array and resiliently to bias the segments apart to an expanded position as shown in Figure 2. The die segments 26 may be further expanded from the position shown in Figure 2, for example to allow the insertion of bent hose ends, and may be compressed against the bias of the springs 32, so that adjacent ones of the side walls 28 are substantially in engagement.

Each of the die segments 26 further includes an arcuate crimping face 34 intersecting the side walls 28. The crimping face 34 is typically disposed parallel with the axis of the crimping machine 10 and extends from the upper surface 30 for a portion of the axial extent of the respective die segment 26. At the lower end of the crimping face 34 is a shoulder 35 in the configuration of an arcuate ledge intersecting the side walls 28 and extending radially inwardly of the crimping face 34. The shoulders 35 of all of the die segments 26, when in the die segment assembly 22, form a segmented, ring-like shelf which contracts and expands together with the die segments 26. A chamfer 36 may be provided at the lower end of each die segment 26, extending between the shoulder 35 and the lower surface 31 to facilitate placement of end fittings within the die assembly 22.

The crimp locator feature provided by the shoulders 35 is seen in Figures 3 and 4 in relation to an end fitting 38 and a hose end 39. The fitting 38 includes a tubular collar 40 into which the hose end 39 is inserted, the hose end 39 typically being a section of high pressure, reinforced flexible hose which may have another fitting coupled at the opposite end. The fitting 38 includes as well, a tubular insert member which is inserted in the hose end 39 for internal support of the hose end 39, and a free end 41 which may be a straight end threaded, for example, for attachment to a utilization device or a bent end which may extend at an angle from the axis of the hose end 39. In the latter instance such a bent hose end may protrude through the cut-out 19 of the pusher member 18, during the crimping operation.

In the crimping operation, the end fitting 38 and the hose end 39 are inserted from the bottom of the crimping machine 10 through the die cavity 20 and through the die segment assembly 22, with all components being returned to rest in the position depicted in Figure 3. In this pre-crimp position the die segment assembly 22 is supported in the die cavity 20 by its own weight and is retained in a slightly separated position, as indicated in Figure 2, by the bias of the springs 32. In this position the crimping faces 34 of the die segments are spaced slightly from the collar 40 of the end fitting 38 and the lower edge 42 of the fitting rests on the ledge formed by the shoulders 35. The die ring 24 is placed over the die segments 26 and under the urging of the ram 17 is moved downwardly into contact with the upper surface of the base plate 11, moving the die segments 26 therewith toward the narrow end of the die cavity 20 to the final crimped position depicted in Figure 4.

During such downward movement the die segments 26 are moved in unison due to the engagement between the segments and the die ring 24, axially into the tapered die cavity and radially inwardly to a radially and circumferentially constricted position. During this movement the crimping faces 34 of the die segments 26 engage the collar 40 of the end fitting 38 and radially deform it to the condition depicted in Figure 4. Also during this movement it will be noted that the lower edge 42 of the collar 40 remains in contact with the shoulders 35 and maintains the orientation of the collar 40 with respect to the crimping faces 34.

At the completion of the crimping operation, the ram 17 is retracted allowing the die segments 26 to be separated and allowing the hose fitting 38 to be removed in a procedure which is the reverse of the loading procedure previously described. It will be clear that the dimensions of the shoulders 35 must be such as to provide support for the fitting prior to crimping, guidance during the crimping operation, and yet not extend so far radially inwardly as to affect the loading and unloading of the fitting or deformation of the hose end 39. Similarly many different configurations of the crimp locator may be employed including changes in dimensions or shapes from that depicted. It will be clear that this crimp locator, positioning of the fitting 38 can be made substantially only by feel by the operator and a reliable and secure crimp can be obtained at the proper location along the collar 40 to achieve a hose assembly of optimum performance.

## Claims

1. Apparatus for permanently attaching a coupling of the kind having a collar (40) and an insert upon the end of flexible hose (39), comprising a hydraulically actuated tool for developing force for crimping said hose coupling, said tool having a base plate (11) and a ram (17) axially movable relative to the base plate (11), a die cavity (20) in the base plate (11), the die cavity comprising an aperture with a tapered surface (21) surrounding the aperture, a plurality of die segments (26) supported in the die cavity (20) in a circular array surrounding the aperture, the die segments (26) having radially inner crimping faces (34) for engagement with the hose coupling (38) and a tapered outer surface (29) in engagement with the tapered surface (21) of the die cavity (20) and being capable of being moved axially downwardly with respect to the die cavity (20) toward the narrow end thereof in response to urging of the ram (17), thereby to be moved radially inwardly toward a radially constricted crimping position, resilient means (32) in engagement with the die segments (26) for securing simultaneous movement of the die segments (26) into the die cavity (20) and simultaneous movements of the die segments (26) toward the radially constricted crimping position for crimping of the coupling (38), and positioning means (35) for engagement by the hose coupling (38) for relatively positioning the hose coupling (38) axially with respect to the crimping faces (34), permitting limited radial movement of the coupling (38) relative to the die segments (26) prior to crimping so that the coupling (38) may conform to the crimping faces (34) of the die segments (26) and for maintaining said relative axial position until the coupling (38) is fully crimped,

characterised in that the positioning means comprises ledge means (35) on the die segments (26) extending radially inwardly of the crimping faces (34) adjacent the lower edge of the crimping faces (34) to engage beneath the lower edge of the coupling (38) and thereby support and position the coupling (38).

2. Apparatus according to claim 1, wherein the ledge means comprises shoulder (35) on each of the die segments (26) having a flat upper surface.

3. Apparatus according to claim 2, wherein each of the shoulders (35) is an arcuate extension of the crimping face (34) and generally is of the same circumferential extent as the die segment (26) thereby to form with the other shoulders (35), a ring-like shelf support of the coupling (38) while allowing relative radial movement of the coupling (38) with respect to the die segments (26) prior to the crimping operation.

**Patentansprüche**

1. Vorrichtung zum dauerhaften Anbringen einer Kupplung, die einen Ring (40) und einen Einsatz aufweist, am Ende eines flexiblen Schlauches (39), mit

einem hydraulisch betätigten Werkzeug zum Ausüben einer Kraft zum Anquetschen der genannten Schlauch

kupplung wobei dieses Werkzeug eine Grundplatte (11) und einen gegenüber der Grundplatte (11) axialbewegbaren Stößel (17) besitzt,

einem in der Grundplatte (11) ausgebildeten Gesenkhohlraum (20), der eine Ausnehmung und eine diese umgebende, konische Fläche (21) besitzt,

einer Mehrzahl von im Gesenkhohlraum (20) abgestützten Gesenksegmenten (26), die einen die Ausnehmung umgebenden, kreisförmigen Kranz bilden und radial einwärtsgelegene Quetschflächen (34) zum Angriff an der Schlauchkupplung (38) und eine konische Außenfläche (29) haben, die an der konischen Fläche (21) des Gesenkhohlraums (20) anliegt und unter der Einwirkung einer von dem Stößel (17) ausgeübten Kraft gegenüber dem Gesenkhohlraum (20) zu dessen kleinerem Ende hin axial abwärtsbewegbar sind, so daß die Gesenksegmente radial einwärts zu einer radial verengten Quetschstellung bewegbar sind,

an den Gesenksegmenten (26) angreifenden, elastischen Mitteln (32) zum Gewährleisten einer gleichzeitigen Bewegung der Gesenksegmente (26) in den Gesenkhohlraum (20) und einer gleichzeitigen Bewegung der Gesenksegmente (26) zu der radial verengten Quetschstellung, so daß die Kupplung (38) gequetscht wird, und

einer Positioniereinrichtung (35) zum Angriff an der Schlauchkupplung (38) derart, daß diese gegenüber den Quetschflächen (34) axial festgelegt ist, dabei aber vor dem Anquetschen eine begrenzte Radialbewegung gegenüber den Gesenksegmenten (26) ausführen kann, so daß sich die Kupplung (38) den Quetschflächen (34) der Gesenksegmente (26) anpassen Kann, und zum Aufrechterhalten der genannten relativen Axialstellung bis die Kupplung (38) vollständig angequetscht ist,

dadurch gekennzeichnet, daß die Positioniereinrichtung an den Gesenksegmenten (26) einen vorstehenden Rand (35) bildet, der sich im Bereich des unteren Randes der Quetschflächen (34) von diesen radial einwärts erstreckt und zum Abstützen und Positionieren der Kupplung (38) deren unteren Rand untergreift.

2. Vorrichtung nach Anspruch 1, dadurch gekennzeichnet, daß der vorstehende Rand von an je einem der Gesenksegmente (26) vorgesehenen Schultern (35) mit ebener oberer Fläche gebildet wird.

3. Vorrichtung nach Anspruch 2, dadurch gekennzeichnet, daß jede der Schultern (35) ein bogenförmiger Fortsatz der Quetschfläche (34) ist und über dieselbe Umfangslänge erstreckt wie das Gesenksegment (26), so daß die Schulter zusammen mit den anderen Schultern (35) einen ringförmigen Absatz zum Abstützen der Kupplung (38) bildet, aber vor dem Anquetschvorgang eine Radialbewegung der Kupplung (38) gegenüber den Gesenksegmenten (26) gestattet.

**Revendications**

1. Appareil pour fixer de façon permanente un accouplement du type comportant une collier (40) et un élément d'insertion, sur l'extrémité d'un tuyau flexible (39), comprenant un outil à commande hydraulique permettant de développer une force de sertissage de l'accouplement de tuyau, cet outil comportant une plaque de base (11) et un piston (17) pouvant se déplacer axialement par rapport à la plaque de base (11), une cavité de matrice (20) formée dans la plaque de base (11), cette cavité de matrice comprenant une ouverture entourée d'une surface conique (21), un certain nombre de segments de matrice (26) montées dans la cavité de matrice (20) dans une disposition circulaire entourant l'ouverture, les segments de matrice (26) présentant des faces de sertissage intérieures (34) destinées à venir radialement en contact avec l'accouplement de tuyau (38) et une surface extérieure conique (29) en contact avec la surface conique (21) de la cavité matrice (20), de manière à pouvoir se déplacer axialement vers le bas par rapport à la cavité de matrice (20) en direction de l'extrémité étroite de celle-ci, sous l'effet de la poussée du piston (17), de manière à se déplacer radialement vers l'intérieur en direction d'une position de sertissage contactée radialement, des moyens élastiques (32) en contact avec des segments de matrice (26) pour produire le mouvement simultané des segments de matrice (26) dans la cavité de matrice (20) et le mouvement simultané des segments de matrice (26) vers la position de sertissage contractée radialement pour sertir l'accouplement (38), et des moyens de positionnement (35) destinés à venir en contact avec l'accouplement de tuyau (38) pour mettre en place axialement l'accouplement de tuyau (38) par rapport aux faces de sertissage (34) en permettant un mouvement radial limité de l'accouplement (38) par rapport au segment de matrice (26) avant le sertissage, de façon que l'accouplement (38) puisse se conformer aux faces de sertissage (34) des segments de matrice (26), et pour maintenir cette position axiale relative jusqu'à ce que l'accouplement (38) soit complètement serti, appareil caractérisé en ce que les moyens de positionnement sont constitués par des moyens de rebord (35) formés sur les segments de matrice (26) et s'étendant radialement vers l'intérieur des faces de sertissage (34) au voisinage du bord inférieur des faces de sertissage (34) pour venir en contact au-dessous du bord inférieur de l'accouplement (38) pour supporter et mettre ainsi en place l'accouplement (38).

2. Appareil selon la revendication 1, caractérisé en ce que les moyens de rebord sont constitués par un épaulement (35) formé sur chacun des segments de matrice (26), cet épaulement présentant une surface supérieure plate.

3. Appareil selon la revendication 2, caractérisé en ce que chacun des épaulements (35) est constitué par un prolongement courbe de la face de sertissage (34) et présente généralement la même longueur périphérique que les segments de matrice (26) pour former ainsi avec les autres épaulements (35) un rebord de forme annulaire permettant de supporter l'accouplement (38) tout en permettant un mouvement radial relatif de cet accouplement (38) par rapport au segment de matrice (26) avant l'opération de sertissage.

0 084 713

Fig. 1

Fig. 2

Fig. 3

Fig. 4